# FASCICULE DE BREVET EUROPEEN

(11) **EP 3 024 317 B1**
(45) Date de publication et mention de la délivrance du brevet: **01.05.2019**
(21) Numéro de dépôt: 14759005.3
(22) Date de dépôt: 23.07.2014
(51) Int. Cl.: A01H 5/10

(54) **ENROBAGE POUR SEMENCE VÉGÉTALE**
BESCHICHTUNG FÜR PFLANZENSAMEN
COATING FOR PLANT SEED

(30) Priorité: 24.07.2013 FR 1357321
(43) Date de publication de la demande: 01.06.2016
(73) Titulaire: Jouffray Drillaud, 86170 Cisse (FR)
(72) Inventeur: BEGUIER, Vincent, F-86700 Couhe (FR)
(74) Mandataire: Jacobacci Coralis Harle
(86) Numéro de dépôt international: PCT/FR2014/051904
(87) Numéro de publication internationale: WO 2015/011411

(56) Documents cités:
- WO-A1-91/01803
- WO-A1-96/24246
- WO-A1-2010/111309
- WO-A1-2012/152737
- WO-A2-2005/062899
- DE-A1- 19 741 648
- R DEAKER: "Legume seed inoculation technology?a review", SOIL BIOLOGY AND BIOCHEMISTRY, vol. 36, no. 8, 1 août 2004 (2004-08-01), pages 1275-1288, XP055108724, ISSN: 0038-0717, DOI: 10.1016/j.soilbio.2004.04.009

## Description

### DOMAINE TECHNIQUE AUQUEL SE RAPPORTE L'INVENTION

La présente invention concerne un enrobage pour semence végétale, destiné en particulier à améliorer la croissance initiale de la plante.

### ARRIERE-PLAN TECHNOLOGIQUE

La rapidité avec laquelle les racines d'une plante atteignent les éléments nutritifs constitue un paramètre déterminant dans le succès du développement et de la croissance initiaux de la plante, c'est-à-dire généralement au cours des premières semaines.

Pour assurer un accès rapide à ces éléments nutritifs, une technique consiste à enrober la surface de la semence végétale avec ces nutriments, ou toutes autres substances ou compositions activant la croissance.

Cet « enrobage » (encore désigné « coating ») a encore pour intérêt de modifier la forme et/ou la taille de la semence, en vue de faciliter le semis.

Mais un enrobage simple peut être limitant pour générer une croissance accélérée des plantules.

### OBJET DE L'INVENTION

Dans ce contexte, la demanderesse propose un nouvel enrobage pour semence végétale, avantageusement du type multicouches, ainsi que l'outil industriel pour le réaliser.

L'enrobage pour semence, selon l'invention, comprend au moins les composés suivants :
- au moins un composé (A) choisi parmi les composés adhésifs, et
- au moins trois des composés (B), (C), (D), (E) ou (F) suivants, pour lesquels :
   (i) le composé (C) consiste en un inoculum choisi parmi les micro-organismes,
   (ii) le composé (D) est choisi parmi les composés biostimulants,
   (iii) le composé (E) est choisi parmi les composés absorbeurs d'eau,
   (iv) le composé (F) est choisi parmi les charges, et
   (v) le composé (B) est choisi parmi les composés fertilisants.

De préférence, cet enrobage comprend au moins les composés (A), (B), (C), (D), (E) et (F).

D'autres caractéristiques avantageuses, pouvant être prise en combinaison ou indépendamment, sont développées ci-dessous :
- le composé (A) est choisi parmi l'un des composés suivants : la gomme arabique, la méthylcellulose ou tout autre produit ayant des fonctions d'adhésion à la semence, notamment ceux dérivés de l'amidon ;
- le composé (B) est choisi parmi les composés fertilisants assurant un apport en macroéléments ;
- le composé (C) est choisi parmi les levures, les champignons et les bactéries ;
- le composé (D) est choisi parmi les acides humiques, les extraits d'algues et les microéléments ;
- le composé (E) est choisi parmi les polymères super-absorbants ou les produits conditionneurs de sols.

La présente invention concerne encore une semence comportant une couche d'un enrobage défini ci-dessus.

Cette couche d'enrobage comporte avantageusement au moins quatre sous-couches superposées.

Une telle couche d'enrobage comporte avantageusement au moins les sous-couches suivantes :
- une sous-couche intérieure, contenant le composé (A),
- plusieurs sous-couches intercalaires, contenant chacune le composé (B) et/ou le composé (C) et/ou le composé (D) et/ou le composé (E), et
- une sous-couche extérieure, contenant au moins le composé (F).

Le poids de la couche d'enrobage est avantageusement compris entre 1% et 100% par rapport au poids de la semence nue.

Cette semence est de préférence choisie dans la famille des graminées, des légumineuses ou des poacées.

La présente invention concerne également un procédé pour l'obtention des semences enrobées précitées, comprenant la succession d'étapes suivantes :
(a) la préparation de composés destinés à former l'enrobage des semences, à savoir au moins :
   - au moins un composé (A) choisi parmi les composés adhésifs, et
   - au moins trois des composés (B), (C), (D), (E) ou (F) suivants, pour lesquels :
      (i) le composé (C) consiste en un inoculum choisi parmi les micro-organismes,
      (ii) le composé (D) est choisi parmi les composés biostimulants,
      (iii) le composé (E) est choisi parmi les composés absorbeurs d'eau,
      (iv) le composé (F) est choisi parmi les charges, et
      (v) le composé (B) est choisi parmi les composés fertilisants,
         puis
(b) l'application sur les semences de la couche d'enrobage, intégrant lesdits composés (A) et (B) et/ou (C) et/ou (D) et/ou (E) et/ou (F), de sorte à obtenir lesdites semences enrobées.

De préférence, l'application de la couche d'enrobage comprend une application séquentielle de sous-couches, pour obtenir une couche d'enrobage du type multicouches.

Dans ce cas, l'application de la couche d'enrobage s'effectue avantageusement de la manière suivante :
- une sous-couche contenant le composé (A), puis
- plusieurs sous-couches successives, contenant chacune les composés (B) et/ou (C) et/ou (D) et/ou (E), puis
- une sous-couche contenant le composé (F) de charge.

La présente invention concerne également l'installation pour la mise en oeuvre du procédé selon l'invention, comprenant :
- des moyens de stockage, destinés à contenir les semences et les composés (A) et (B) et/ou (C) et/ou (D) et/ou (E) et/ou (F),
- des moyens d'application, pour générer une couche d'enrobage (avantageusement du type multicouches) sur les semences,
- des moyens de traitement, pour le séchage et l'élimination du surplus d'enrobage non déposé sur les semences, et
- des moyens de conditionnement pour les semences enrobées et séchées.

### DESCRIPTION DETAILLEE D'UN EXEMPLE DE REALISATION

L'invention sera encore illustrée, sans être aucunement limitée, par la description suivante, donnée uniquement à titre d'exemple, en relation avec les dessins annexés dans lesquels :
- les figures 1 et 2 représentent chacune, schématiquement, une semence selon l'invention comportant une couche d'enrobage du type multicouches (les différentes sous-couches sont représentées schématiquement et leurs épaisseurs respectives ne sont aucunement à l'échelle) ;
- la figure 3 est un schéma bloc illustrant une installation conforme à l'invention, pour la fabrication des semences enrobées.

L'enrobage selon l'invention comprend au moins les composés suivants :
- un ou plusieurs composés (A), choisis parmi les composés adhésifs, et
- plusieurs composés (B) et/ou (C) et/ou (D) et/ou (E) et/ou (F), pour lesquels :
   (i) le ou les composés (C) consistent en un ou des inoculums choisis parmi la famille des micro-organismes, notamment pour optimiser la résistance et l'alimentation de la plante,
   (ii) le ou les composés (D) sont choisis parmi la famille des biostimulants, pour assurer une nutrition des jeunes plantules,
   (iii) le ou les composés (E) sont choisis parmi la famille des composés absorbeurs d'eau, aptes à améliorer l'imbibition de la semence et de ce fait la vitesse de germination,
   (iv) le ou les composés (F) sont choisis parmi la famille des charges, et
   (v) le ou les composés (B) sont choisis parmi la famille des composés fertilisants.

L'enrobage selon l'invention comprend l'association de trois, quatre ou cinq, de ces composés (B), (C), (D), (E) et/ou (F).

Selon une forme de réalisation préférée, l'enrobage comprend au moins l'association de tous lesdits composés (A), (B), (C), (D), (E) et (F).

De préférence encore, l'enrobage est constitué uniquement par ces composés (A), (B), (C), (D), (E) et (F).

Lorsqu'ils sont présents dans l'enrobage, chaque composé (A), (B), (C), (D), (E) et (F) consiste avantageusement (i) en une seule espèce ou type de la famille dudit composé chimique ou (ii) en un mélange ou une combinaison d'au moins deux espèces ou types de la famille dudit composé chimique.

Le composé (A), du genre composé adhésif, est avantageusement choisi parmi la gomme arabique et la méthylcellulose.

Ce composé (A) peut encore être choisi parmi tout autre produit permettant une adhésion de produits autour de la graine, sans être agressif pour cette dernière ni affecter sa germination.

Le composé (B), du genre composé fertilisant, consiste avantageusement en un engrais.

Les composés fertilisants (B) sont de préférence choisis parmi les composés fertilisants assurant un apport en macroéléments, notamment en azote, en phosphore et en potassium.

Par exemple, l'engrais peut contenir du phosphate monocalcique, du phosphate monopotassique, du phosphate d'ammonium, du phosphate d'urée ou un mélange de ceux-ci.

Le composé (C), du genre inoculum micro-organiques, est avantageusement choisi parmi les levures, les champignons, les bactéries, ou un mélange de ceux-ci. Il est adapté à la semence à enrober, et choisi pour ses propriétés bénéfiques pour la semence.

De préférence, cet inoculum consiste en un agent de bactérisation, tel que les Rhizobactéries, ou de mycorhization.

Parmi les Rhizobactéries, on utilise de préférence des Rhizobactéries promotrices de la croissance végétale (ou « PGPR ») comme *Azospirillum, Pseudomonas* ou *Bacillus,* ou encore *Rhizobium* dans le cas des légumineuses.

Les champignons de mycorhization appartiennent avantageusement au groupe des *Gloméromycètes,* des *Basidiomycètes* et des *Ascomycètes.*

L'enrobage contenant un tel composé (C) permet l'obtention d'une semence dite « inoculée ».

Le composé (D), du genre biostimulant, est avantageusement choisi parmi les acides humiques, les extraits d'algues, les microéléments.

De manière générale, par « biostimulant », on entend un produit d'origine biologique qui favorise la croissance et le développement des plantes.

Par « acides humiques », on entend notamment un produit acide issu de la décomposition des végétaux et présent dans l'humus des sols.

Par « extraits d'algues », on entend notamment les extraits *d'Ascophyllum nodosum.*

Par « microéléments », on entend notamment le molybdène, le bore, le zinc.

Le composé (E), du type absorbeur d'eau, est avantageusement choisi parmi les polymères super-absorbants (encore désignés en anglais « superabsorptive polymer » ou « SAP »), ou les conditionneurs de sols.

Par « polymères super-absorbants », on entend par exemple les composés suivants : les polyacrylamides ou des formes issues de l'amidon.

Le composé (F), du type charge, est avantageusement choisi parmi les charges en poudre, par exemple le carbonate de calcium, la diatomite ou l'argile.

De manière générale, par « charges », on entend les substances solides, non miscibles et dispersées par un moyen mécanique dans une matrice.

Avant leur application sur la semence, chacun des composés (A), (B), (C), (D), (E) et (F) de l'enrobage se présente avantageusement sous une forme de poudre et/ou de liquide et/ou de bouillie.

La présente invention porte encore sur une semence comportant une couche d'un enrobage tel que défini ci-dessus.

Le poids de cette couche d'enrobage sur une semence, définissant l'épaisseur de cette couche d'enrobage, est avantageusement compris entre 1% et 100% du poids de la semence nue.

Le composé (F), du type charge, assure avantageusement la charge à au moins 90%.

La semence consiste avantageusement en une pluralité de semences ou de graines, et est choisie de préférence dans la famille des graminées, légumineuses ou poacées.

En particulier, cette semence est avantageusement choisie dans l'une des familles suivantes :
- les céréales cultivées, en particulier le maïs, le blé, l'orge, l'avoine, le seigle ; ou
- les légumineuses cultivées, telles que la luzerne, le trèfle blanc, le trèfle violet, le trèfle d'Alexandrie, le trèfle incarnat, la vesce commune, la vesce velue, la vesce de Pannonie, la féverole, le pois, le lupin, le soja, etc. ; ou
- les graminées fourragères et gazon, comme le dactyle, la fétuque, le ray-grass, le brome, et le pâturin des prés.

Sur ces semences, la couche d'enrobage est avantageusement du type multicouches.

Cette couche d'enrobage se compose ainsi d'un ensemble de sous-couches ou strates superposées sur cette semence.

Ces sous-couches sont avantageusement au nombre de 4 à 10.

Cette couche d'enrobage comporte de préférence au moins quatre sous-couches ou strates superposées :
- une sous-couche intérieure, recouvrant directement la semence, contenant le composé (A),
- plusieurs sous-couches intercalaires (par exemple de deux à huit sous-couches), contenant chacune le composé (B) et/ou le composé (C) et/ou le composé (D) et/ou le composé (E), et
- une sous-couche extérieure, contenant au moins le composé (F).

La ou les sous-couches intercalaires contiennent chacune :
- un composé unique choisi parmi les composés (B), (C), (D) et (E), ou
- un mélange d'au moins deux composés choisis parmi les composés (B), (C), (D) et (E).

Ces différentes sous-couches intercalaires peuvent comporter des compositions différentes les unes par rapport aux autres.

Les différences de composition entre les sous-couches intercalaires englobent notamment :
- des proportions différentes pour les composés en présence,
- des composés différents entre les sous-couches.

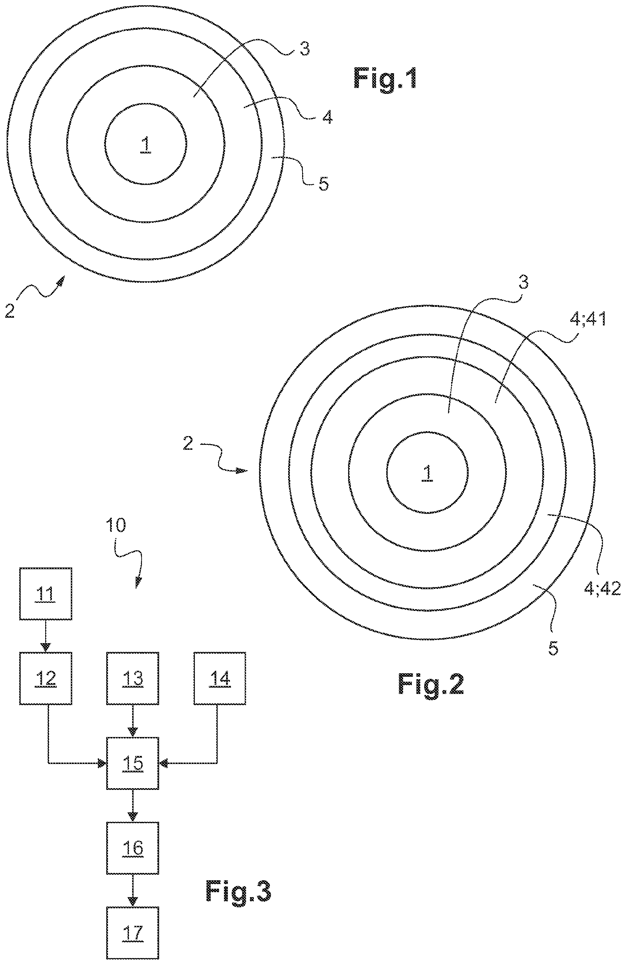

Les figures 1 et 2 illustrent schématiquement deux exemples possibles de réalisation pour des semences enrobées selon l'invention, qui comportent chacune une semence 1 munie d'une couche d'enrobage 2 du type multicouches (les épaisseurs de ces différentes couches ne sont aucunement à l'échelle).

La couche d'enrobage 2 se compose d'un ensemble de sous-couches 3, 4 et 5 superposées sur cette semence 1, à savoir :
- la sous-couche intérieure 3, recouvrant directement la semence 1, contenant le composé (A),
- les sous-couches intercalaires 4, contenant chacune le composé (B) et/ou le composé (C) et/ou le composé (D) et/ou le composé (E), et
- la sous-couche extérieure 5, contenant au moins le composé (F).

La couche d'enrobage 2 selon la figure 1 comporte plusieurs sous-couches intercalaires, repérées 4 ensemble, contenant le composé (B) et/ou le composé (C) et/ou le composé (D) et/ou le composé (E).

Sur la couche d'enrobage 2 selon la figure 2 on a représenté deux sous-couches intercalaires 4, l'une intérieure 41 et l'autre extérieure 42, contenant chacune le composé (B) et/ou le composé (C) et/ou le composé (D) et/ou le composé (E).

Par exemple, la sous-couche intercalaire intérieure 41 comprend le composé (B), et la sous-couche intercalaire extérieure 42 comprend le composé (C).

La sous-couche extérieure 5 peut contenir le composé (F), par exemple en combinaison avec le composé (E).

La présente invention concerne encore un procédé et une installation 10 (figure 3) pour l'obtention des semences enrobées telles que décrites ci-dessus.

Tout d'abord, le composé (A) adhésif et les composés actifs (B) et/ou (C) et/ou (D) et/ou (E) sont préparés indépendamment.

L'installation 10 comporte pour cela des moyens de mélange 11 adaptés.

Les préparations obtenues se présentent chacune par exemple sous la forme d'une bouillie.

Plusieurs bouillies sont fabriquées pour constituer les différentes sous-couches.

Au moins deux bouillies contenant les composés actifs (B) et/ou (C) et/ou (D) et/ou (E) peuvent être mélangées ; il est ainsi obtenu une bouillie mélange contenant une combinaison des composés actifs (B) et/ou (C) et/ou (D) et/ou (E).

Ces bouillies sont transférées et conservées, indépendamment, dans des moyens de stockage 12.

L'installation 10 comporte également - des moyens de stockage 13 pour les semences à enrober, et - des moyens de stockage 14 pour le composé (F) de charge en poudre.

Le procédé comprend ensuite une étape de mélange séquentiel des semences avec successivement certaines au moins des bouillies.

En effet, ces produits sont injectés, un par un, au sein de moyens d'application 15, de sorte à s'agglomérer l'un après l'autre autour de la graine ou le cas échéant de la sous-couche précédente.

La couche d'enrobage obtenue sur la semence est ainsi du type multi-couche ou mille-feuille.

Par exemple, les produits peuvent être appliqués de la manière suivante :
- la bouillie contenant le composé (A), pour former la sous-couche intérieure 3, puis
- plusieurs bouillies successives, contenant les composés (B) et/ou (C) et/ou (D) et/ou (E), pour former les sous-couches intercalaires 4, puis
- la poudre contenant le composé (F) de charge, pour former la sous-couche extérieure 5.

La quantité du composé (A) est adaptée notamment en fonction de la taille, du poids, du type de surface des semences et de la quantité de composés (B), (C), (D), (E) et (F) à enrober.

La quantité respective de ces composés (B) et/ou (C) et/ou (D) et/ou (E) est adaptée à façon, notamment en fonction de la taille et du poids des semences, et des effets attendus.

Cette étape de mélange s'effectue au sein des moyens d'application 15, par exemple du type bol mélangeur.

Ces moyens d'application 15 permettent ici de générer un enrobage du type multicouches sur chaque semence, en gérant les bouillies et les poudres de manière séquentielle.

L'enrobage comprend avantageusement jusqu'à 10 séquences (c'est-à-dire par exemple 2, 3, 4, 5, 6, 7, 8, 9 ou 10 séquences) pour obtenir un enrobage multicouches, complexe, avec plusieurs bouillies et plusieurs poudres mobilisables (par exemple jusqu'à deux poudres et quatre bouillies).

Cet enrobage est appliqué en quantité suffisante, notamment pour modifier la forme et/ou la taille de la semence, en vue de faciliter le semis.

Les semences enrobées obtenues font ensuite l'objet d'un séchage et d'une élimination du surplus d'enrobage non déposé.

Ces opérations s'effectuent par exemple dans des moyens de traitement 16 du type grilles calibrées.

Les semences enrobées, et séchées, sont ensuite conditionnées par la mise en oeuvre de moyens de conditionnement 17, par exemple du type ensacheuses, cela en nombre de graines pour une surface donnée.

En pratique, les semences enrobées selon l'invention ont en particulier l'intérêt de présenter une implantation améliorée par rapport à des semences nues (non enrobées).

## Revendications

1. Semence comportant une couche d'un enrobage, laquelle couche d'enrobage comporte plusieurs sous-couches superposées, **caractérisée en ce que** ladite couche d'enrobage comporte au moins les sous-couches suivantes :
- une sous-couche intérieure, contenant le composé (A) choisi parmi les composés adhésifs,
- au moins trois sous-couches intercalaires, l'une contenant un composé (B) choisi parmi les composés fertilisants, une autre contenant un composé (C) consistant en un inoculum choisi parmi les micro-organismes, une autre contenant un composé (D) choisi parmi les composés biostimulants, et éventuellement une autre contenant un composé (E) choisi parmi les composés absorbeurs d'eau, et
- une sous-couche extérieure, contenant au moins le composé (F) choisi parmi les charges.

2. Semence selon la revendication 1, **caractérisée en ce que** la couche d'enrobage comprend au moins les composés (A), (B), (C), (D), (E) et (F).

3. Semence selon l'une quelconque des revendications 1 ou 2, **caractérisée en ce que** le composé (B) est choisi parmi les composés fertilisants assurant un apport en macroéléments.

4. Semence selon l'une quelconque des revendications 1 à 3, **caractérisée en ce que** le composé (A) est choisi parmi l'un des composés suivants : la gomme arabique, la méthylcellulose ou les produits dérivés de l'amidon.

5. Semence selon l'une quelconque des revendications 1 à 4, **caractérisée en ce que** le composé (C) est choisi parmi les levures, les champignons et les bactéries.

6. Semence selon l'une quelconque des revendications 1 à 5, **caractérisée en ce que** le composé (D) est choisi parmi les acides humiques, les extraits d'algues et les microéléments.

7. Semence selon l'une quelconque des revendications 1 à 6, **caractérisée en ce que** le composé (E) est choisi parmi les polymères super-absorbants ou les produits conditionneurs de sols.

8. Semence selon l'une quelconque des revendications 1 à 7, **caractérisée en ce que** le poids de la couche d'enrobage est compris entre 1% et 100% par rapport au poids de la semence nue.

9. Semence selon l'une quelconque des revendications 1 à 8, **caractérisée en ce que** ladite semence est choisie dans la famille des graminées, des légumineuses ou des poacées.

10. Procédé pour l'obtention de semences enrobées selon l'une quelconque des revendications 1 à 9, **caractérisé en ce qu'**il comprend la succession d'étapes suivantes :
(a) la préparation de composés destinés à former l'enrobage des semences, à savoir au moins :
- au moins un composé (A) choisi parmi les composés adhésifs, et
- au moins les composés (B), (C), (D) et (F) suivants, et éventuellement le composé (E), pour lesquels :
(i) le composé (C) consiste en un inoculum choisi parmi les micro-organismes,
(ii) le composé (D) est choisi parmi les composés biostimulants,
(iii) le composé (E) est choisi parmi les composés absorbeurs d'eau,
(iv) le composé (F) est choisi parmi les charges, et
(v) le composé (B) est choisi parmi les composés fertilisants,
puis
(b) l'application sur les semences de la couche d'enrobage, comprenant une application successive de sous-couches pour obtenir une couche d'enrobage du type multicouches, à savoir :
- une sous-couche intérieure, contenant le composé (A) choisi parmi les composés adhésifs,
- plusieurs sous-couches intercalaires, l'une contenant un composé (B) choisi parmi les composés fertilisants, une autre contenant un composé (C) consistant en un inoculum choisi parmi les micro-organismes, une autre contenant un composé (D) choisi parmi les composés biostimulants, et éventuellement une autre contenant un composé (E) choisi parmi les composés absorbeurs d'eau, et
- une sous-couche extérieure, contenant au moins le composé (F) choisi parmi les charges,
de sorte à obtenir lesdites semences enrobées.

## Patentansprüche

1. Samen mit einer Schicht einer Beschichtung, wobei die Beschichtungsschicht mehrere übereinander liegende Unterschichten aufweist, **dadurch gekennzeichnet, daß** die Beschichtungsschicht wenigstens die folgenden Unterschichten aufweist:
- eine innere Unterschicht, die die unter den haftenden Verbindungen ausgewählte Verbindung (A) enthält,
- wenigstens drei Zwischenunterschichten, von denen eine eine unter den düngenden Verbindungen ausgewählte Verbindung (B) enthält, eine andere eine aus einem unter den Mikroorganismen ausgewählten Inokulum bestehende Verbindung (C) enthält, eine andere eine unter den biostimulierenden Verbindungen ausgewählte Verbindung (D) enthält, und eventuell eine andere eine unter den Wasser absorbierenden Verbindungen ausgewählte Verbindung (E) enthält, und
- eine äußere Unterschicht, die wenigstens die unter den Ballaststoffen ausgewählte Verbindung (F) enthält.

2. Samen gemäß Anspruch 1, **dadurch gekennzeichnet, daß** die Beschichtungsschicht wenigstens die Verbindungen (A), (B), (C), (D), (E) und (F) aufweist.

3. Samen gemäß einem der Ansprüche 1 oder 2, **dadurch gekennzeichnet, daß** die Verbindung (B) unter den düngenden Verbindungen ausgewählt ist, die eine Zufuhr von Makroelementen sicherstellen.

4. Samen gemäß einem der Ansprüche 1 bis 3, **dadurch gekennzeichnet, daß** die Verbindung (A) unter einer der folgenden Verbindungen ausgewählt ist: Gummi arabicum, Methylzellulose oder die von Stärke abgeleiteten Produkte.

5. Samen gemäß einem der Ansprüche 1 bis 4, **dadurch gekennzeichnet, daß** die Verbindung (C) unter den Hefen, den Pilzen und den Bakterien ausgewählt ist.

6. Samen gemäß einem der Ansprüche 1 bis 5, **dadurch gekennzeichnet, daß** die Verbindung (D) unter den Huminsäuren, den Algenextrakten und den Mikroelementen ausgewählt ist.

7. Samen gemäß einem der Ansprüche 1 bis 6, **dadurch gekennzeichnet, daß** die Verbindung (E) unter den superabsorbierenden Polymeren oder den Bodenaufbereitungsprodukten ausgewählt ist.

8. Samen gemäß einem der Ansprüche 1 bis 7, **dadurch gekennzeichnet, daß** das Gewicht der Beschichtungsschicht zwischen 1 % und 100 % des Gewichts der nackten Samen beträgt.

9. Samen gemäß einem der Ansprüche 1 bis 8, **dadurch gekennzeichnet, daß** die Samen aus der Familie der Süßgräser, der Hülsenfrüchte oder der Grasartigen ausgewählt sind.

10. Verfahren zum Erhalten von beschichteten Samen gemäß einem der Ansprüche 1 bis 9, **dadurch gekennzeichnet, daß** es die folgende Schrittfolge aufweist:
(a) Vorbereitung von Verbindungen, die dazu bestimmt sind, die Beschichtung der Samen zu bilden, und zwar mindestens:
- wenigstens eine unter den haftenden Verbindungen ausgewählte Verbindung (A),
- wenigstens die folgenden Verbindungen (B), (C), (D), (F) und eventuell die Verbindung (E), von denen:
(i) die Verbindung (C) aus einem unter den Mikroorganismen ausgewählten Inokulum besteht,
(ii) die Verbindung (D) unter den biostimulierenden Verbindungen ausgewählt ist,
(iii) die Verbindung (E) unter den Wasser absorbierenden Verbindungen ausgewählt ist,
(iv) die Verbindung (F) unter den Ballaststoffen ausgewählt ist und
(v) die Verbindung (B) unter den düngenden Verbindungen ausgewählt ist,
dann
(b) Aufbringen der Beschichtungsschicht auf die Samen mit einem aufeinanderfolgenden Aufbringen von Unterschichten, um eine Beschichtungsschicht vom mehrschichtigen Typ zu erhalten, und zwar
- eine innere Unterschicht, die die unter den haftenden Verbindungen ausgewählte Verbindung (A) enthält,
- mehrere Zwischenunterschichten, von denen eine eine unter den düngenden Verbindungen ausgewählte Verbindung (B) enthält, eine andere eine aus einem unter den Mikroorganismen ausgewählten Inokulum bestehende Verbindung (C) enthält, eine andere eine unter den biostimulierenden Verbindungen ausgewählte Verbindung (D) enthält, und eventuell eine andere eine unter den Wasser absorbierenden Verbindungen ausgewählte Verbindung (E) enthält, und
- eine äußere Unterschicht, die wenigstens die unter den Ballaststoffen ausgewählte Verbindung (F) enthält,
um die beschichteten Samen zu erhalten.

## Claims

1. A seed with a coating layer, wherein said coating layer includes several superimposed sub-layers, **characterized in that** said coating layer includes at least the following sub-layers:
- an inner sub-layer, containing the compound (A) chosen among adhesive compounds,
- at least three intermediate sub-layers, one containing a compound (B) chosen among fertilizing compounds, another one containing a compound (C) consisting of an inoculum chosen among micro-organisms, another one containing a compound (D) chosen among biostimulating compounds, and possibly another one containing a compound (E) chosen among water-absorbing compounds, and
- an outer sub-layer, containing at least the compound (F) chosen among fillers.

2. The seed according to claim 1, **characterized in that** the coating layer comprises at least the compounds (A), (B), (C), (D), (E) and (F).

3. The seed according to any one of claims 1 or 2, **characterized in that** the compound (B) is chosen among fertilizing compounds providing an intake of macro-elements.

4. The seed according to any one of claims 1 to 3, **characterized in that** the compound (A) is chosen among one of the following compounds : gum arabic, methylcellulose or starch-derived products.

5. The seed according to any one of claims 1 to 4, **characterized in that** the compound (C) is chosen among yeasts, mushrooms and bacteria.

6. The seed according to any one of claims 1 to 5, **characterized in that** the compound (D) is chosen among humic acids, seaweed extracts and micro-elements.

7. The seed according to any one of claims 1 to 6, **characterized in that** the compound (E) is chosen among super-absorbing polymers or ground conditioning products.

8. The seed according to any one of claims 1 to 7, **characterized in that** the weight of the coating layer is comprised between 1 % and 100 % of the weight of the naked seed.

9. The seed according to any one of claims 1 to 8, **characterized in that** said seed is chosen in the family of graminaceae, legumes or poaceae.

10. A method for obtaining coated seeds according to any one of claims 1 to 9, **characterized in that** it comprises the succession of following steps:
(a) preparing compounds intended to form the coating of the seeds, i.e.:
- at least one compound (A) chosen among adhesive compounds, and
- at least the following compounds (B), (C), (D) and (F), and possibly the compound (E), wherein:
(i) compound (C) consists of an inoculum chosen among micro-organisms,
(ii) compound (D) is chosen among biostimulating compounds,
(iii) compound (E) is chosen among water-absorbing compounds,
(iv) compound (F) is chosen among fillers, and
(v) compound (B) is chosen among fertilizing compounds,
then
(b) applying onto the seed a coating layer, comprising applying successive sub-layers to obtain a coating layer of the multilayer type, i.e.:
- an inner sub-layer, containing the compound (A) chosen among adhesive compounds,
- several intermediate sub-layers, one containing a compound (B) chosen among fertilizing compounds, another one containing a compound (C) consisting of an inoculum chosen among micro-organisms, another one containing a compound (D) chosen among biostimulating compounds, and possibly another one containing a compound (E) chosen among water-absorbing compounds, and
- an outer sub-layer, containing at least the compound (F) chosen among fillers,
so as to obtain said coated seeds.
